# EUROPEAN PATENT APPLICATION

(11) **EP 4 570 469 A1**
(43) Date of publication of application: **18.06.2025**
(21) Application number: 23852394.8
(22) Date of filing: 27.07.2023
(51) Int. Cl.: B29C 48/385, B29B 7/40, B29B 7/46, B29C 48/395, B29C 48/40, B29C 48/76

(54) **BIAXIAL CONTINUOUS KNEADING EXTRUSION DEVICE**

(30) Priority: 10.08.2022 JP 2022136357
(71) Applicant: CTE CO., LTD, Ageo-shi, Saitama 362-0032 (JP)
(72) Inventor: MORITA, Keita, 3620032 Saitama (JP)
(74) Representative: Hoffmann Eitle
(86) International application number: PCT/JP2023/027568
(87) International publication number: WO 2024/034420

(57) **Abstract**

To achieve high kneading, high dispersion, and low-temperature control of a material. A biaxial continuous kneading extrusion device 10 includes a biaxial kneading feeder 16 including two passage sections 11 and 12 arranged in parallel in a state of communication with each other, and first and second kneading feed shafts 14 and 15 rotatably arranged in the two passage sections, respectively, to knead a supplied material and a uniaxial screw section 33 including a single passage section 31 that receives the material fed out from the biaxial kneading feeder 16, and a separate screw shaft 32 rotatably disposed in the single passage section to extrude the material. In each of the first and second kneading feed shafts 14 and 15, a mixing rotor 19 is formed in at least one section in an axial direction, a maximum outer diameter section at which a radius is maximized in a cross section perpendicular to the axial direction is formed in a section of an outer periphery of the mixing rotor, a chip clearance is formed between the maximum outer diameter section and inner walls of the passage sections, and the material is sheared when passing through the chip clearance.

## Description

### TECHNICAL FIELD

The present invention relates to a biaxial continuous kneading extrusion device.

### BACKGROUND ART

A biaxial continuous kneading extrusion device is known, which includes two deepgroove screws arranged in parallel and continuously performs melting, kneading, deaeration, and extrusion of a synthetic resin material. In this conventional biaxial continuous kneading extrusion device, two screws having the same length rotate in the same direction and mesh with each other. In the conventional biaxial continuous kneading extrusion device, however, there are several problems that should be improved: (1) failure of uniform engagement of a composite raw material fed into the extrusion device (feed neck phenomenon); (2) to achieve high kneading retention of the composite material and low temperature control of a resin temperature; (3) high kneading and high dispersion of a composite material having different melt viscosities and melting temperatures; (4) need for sufficient effects of deaeration of moisture from a vent part, generated gas and the like; and (5) to secure high productivity (high extrusion amount) economically and profitably.

### SUMMARY OF INVENTION

### TECHNICAL PROBLEM

An object of the present invention, which has been made in view of the above fact, is to provide a biaxial continuous kneading extrusion device that has been improved from a conventional device.

### SOLUTION TO PROBLEM

In order to solve the above problems, a biaxial continuous kneading extrusion device of the present invention includes a biaxial kneading feeder including two passage sections arranged in parallel in a state of communication with each other, and a first kneading feed shaft and a second kneading feed shaft rotatably arranged in the two passage sections, respectively, to knead a material (for example, a resin material) supplied to the two passage sections and a uniaxial screw section including a single passage section that receives the material fed out from the biaxial kneading feeder, and a separate screw shaft rotatably disposed in the single passage section to extrude the material from the single passage section, and in each of the first and second kneading feed shafts, a mixing rotor is formed in at least one section in an axial direction. Preferably, the separate screw shaft is controlled to rotate at a lower speed than a rotation speed of the first kneading feed shaft and the second kneading feed shaft.

According to the present invention, the first kneading feed shaft and the second kneading feed shaft are separately configured from the separate screw shaft, and the first kneading feed shaft and the second kneading feed shaft are rotated at a higher speed to sufficiently perform resin kneading. In contrast, the separate screw shaft is rotated at a low speed to extrude the material while suppressing rise in material temperature in low resin kneading. Therefore, excessive kneading and overheating of the resin are avoided in advance, and burning of the resin can be prevented.

More preferably, in a section of an outer periphery of the mixing rotor, a maximum outer diameter section at which a radius is maximized in a cross section perpendicular to the axial direction is formed, a chip clearance is formed between the maximum outer diameter section and inner walls of the passage sections, and the material is sheared when passing through the chip clearance. Concurrently, the first kneading feed shaft and the second kneading feed shaft are controlled to rotate in mutually opposite directions. The chip clearance (gap G) can be smaller while maintaining mechanical strength, and a shear rate can thus be increased as compared with a conventional biaxial machine in which meshed screws are used. Furthermore, shearing and compression of the material are performed in the mixing rotor. Therefore, a shear force increases, while a shear time shortens. In addition, the shearing and compression are followed by release action, and these actions are repeated, so that even if the shear force is increased, generation of heat is reduced.

Preferably, the two passage sections have a cocoon shape as viewed in the cross section perpendicular to the axial direction. This shape makes it possible to increase a gap between circles drawn by respective maximum outer diameter sections of two mixing rotors and thus increase a release space for the material.

Preferably, the mixing rotor is provided in each of a plurality of sections in the axial direction that are spaced apart from each other in the first and second kneading feed shafts. In this case, a screw may be provided in a section in the axial direction in which the mixing rotor is not formed.

Preferably, a plurality of mixing rotors each formed in each of the plurality of sections in the axial direction is formed so that the chip clearance is smaller as being toward a terminal end of the biaxial kneading feeder when the material decreases viscosity in a process of being molten or so that the chip clearance is larger as being toward the terminal end when the material increases the viscosity in the process of being molten.

Further preferably, each of the first kneading feed shaft and the second kneading feed shaft includes a base shaft, and at least one of the mixing rotor and the screw is replaceably attachable to the base shaft. By freely combining screws having different lengths and different numbers of mixing rotors having different lengths, a kneading time and kneading strength can be adjusted.

In a preferable aspect of the present invention, the biaxial kneading feeder includes a first open vent for deaeration. The uniaxial screw section includes a second open vent for vacuum deaeration. Furthermore, the biaxial kneading feeder and the uniaxial screw section include heating means for heating the material. According to the present aspect, the resin material supplied to the two passage sections is preheated by the heating means and made to be in a semi-gel state in the biaxial kneading feeder. Accordingly, after deaerating the moisture adhered to the resin material with the first open vent, the material is melted and kneaded, and hence moisture is not kneaded into the molten resin material. As a result, in the uniaxial screw section, the vacuum deaeration of the molten resin can be sufficient, and finally high-quality kneaded resin can be obtained with high discharge capacity.

Preferably, when the material supplied to the two passage sections is a pellet material, to make the pellet material to be in a semi-gel state with the mixing rotor, the chip clearance is set to be smaller than a maximum dimension of the pellet material, or when the material supplied to the two passage sections is a powder material, to make the powder material to be in the semi-gel state with the mixing rotor, the chip clearance is set depending on a particle size of the powder material.

Further preferably, in a flow path in which the material flows from the biaxial kneading feeder to the uniaxial screw section, a flow rate adjustment mechanism is provided for adjusting a flow rate of the material.

### BRIEF DESCRIPTION OF DRAWINGS

Fig. 1 is a schematic cross-sectional view showing a biaxial continuous kneading extrusion device according to one embodiment of the present invention.
Fig. 2 is a schematic explanatory view of a biaxial kneading feeder in Fig. 1.
Fig. 3 is a cross-sectional view along the 2-2 line in Fig. 2.
Fig. 4 is a cross-sectional view along the 4-4 line in Fig. 2.

### DESCRIPTION OF EMBODIMENTS

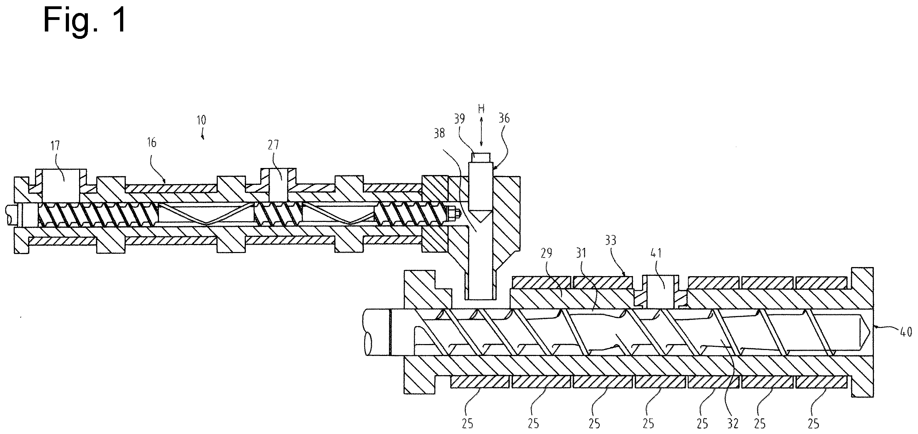

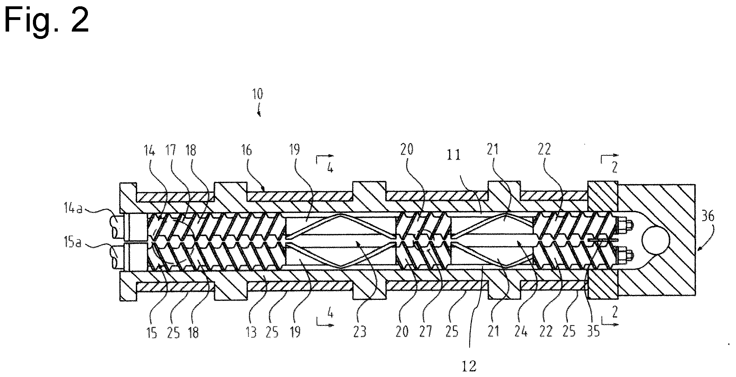

Hereinafter, embodiments of a biaxial continuous kneading extrusion device of the present invention will be described with reference to the drawings. Figs. 1 and 2 show a biaxial continuous kneading extrusion device 10 according to one embodiment of the present invention. As shown in Fig. 1, the biaxial continuous kneading extrusion device 10 of this embodiment includes a biaxial kneading feeder 16 that kneads a material, and a uniaxial screw section 33 that receives the material fed out from the biaxial kneading feeder 16, to extrude the material.

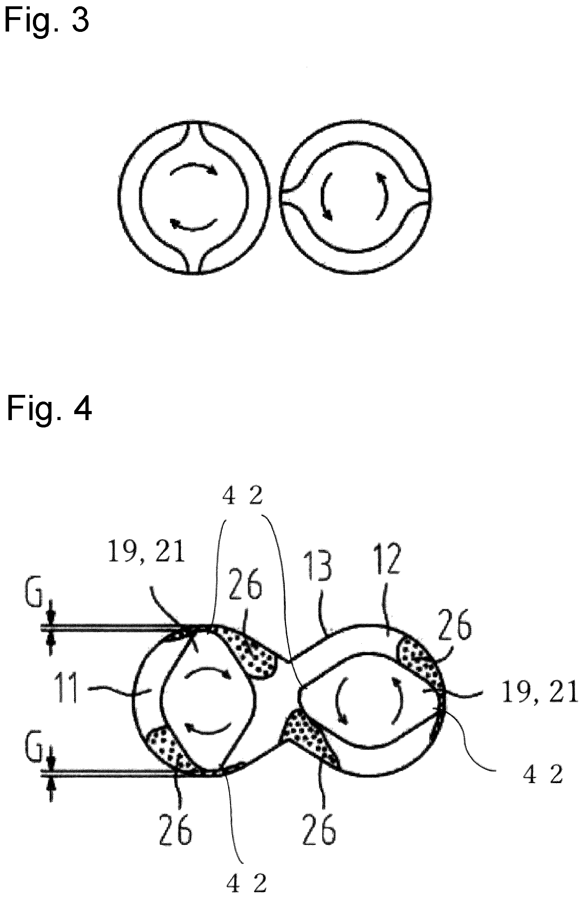

As best shown in Fig. 2, the biaxial kneading feeder 16 includes, in a first casing 13, two passage sections 11 and 12 arranged in parallel in a state of communication with each other, and a first kneading feed shaft 14 and a second kneading feed shaft 15 rotatably arranged in the two passage sections 11 and 12, respectively. The two passage sections 11 and 12 overlap to form a cocoon shape as viewed in a cross section perpendicular to an axial direction (See Fig. 4), and the material can communicate between the two passage sections 11 and 12. The first kneading feed shaft 14 and the second kneading feed shaft 15 are controlled to rotate in mutually opposite directions by an unshown drive controller. Note that a rotation speed of one of the first kneading feed shaft 14 and the second kneading feed shaft 15 may be higher than a rotation speed of the other (for example, by about 10%). To an outer periphery of the first casing 13, heating means 25 may be attached.

The uniaxial screw section 33 includes a single passage section 31 disposed apart from and downstream of the first kneading feed shaft 14 and the second kneading feed shaft 15 and formed in a second casing 29, and a separate single screw shaft 32 rotatably disposed in the passage section 31. The single screw shaft 32 is controlled to rotate at a lower speed than at least the first and second kneading feed shafts 14 and 15 by an unshown drive controller. To an outer periphery of the second casing 29, the heating means 25 may be attached.

At one end of the first casing 13 in the biaxial kneading feeder 16, a material supply port 17 (see Figs. 1 and 2) in communication with the respective passage sections 11 and 12 is formed. A resin material is fed to the material supply port 17 from an unshown resin supply device. In each of the two kneading feed shafts 14 and 15, a first screw 18, a first mixing rotor 19, a second screw 20, a second mixing rotor 21 and a third screw 22 are arranged and configured in order from one upstream end in respective sections along the axial direction (see Fig. 2).

The first and second kneading feed shafts 14 and 15 are composed by selectively arranging and attaching segmented screws and mixing rotors having various lengths to base shafts 14a and 15a. Therefore, by freely combining screws having different lengths and different numbers of mixing rotors having different lengths, a kneading time and kneading strength can be adjusted. Therefore, these mixing rotors and screws are preferably configured to be replaceable.

In addition, the first screw 18, the first mixing rotor 19, the second screw 20, the second mixing rotor 21 and the third screw 22 in the first kneading feed shaft 14 can be symmetrical with those attached to the second kneading feed shaft 15 as shown in the drawing and may be asymmetrical. In any case, the first and second kneading feed shafts 14 and 15 cooperate to efficiently knead and feed out the material. For example, a first mixing section 23 in the biaxial kneading feeder 16 is composed of two first mixing rotors 19 arranged adjacent to and cooperating with each other in the kneading feed shafts 14 and 15 as shown in Fig. 2.

Similarly, a second mixing section 24 in the biaxial kneading feeder 16 is composed of two second mixing rotors 21 adjacent to and cooperating with each other in the kneading feed shafts 14 and 15. In the biaxial kneading feeder 16, the first mixing section 23 which the material fed from the material supply port 17 through both the kneading feed shafts 14 and 15 first reaches is configured to make the material to be in a semi-gel state.

A configuration of the first mixing section 23 (second mixing section 24) for making the material to be in the semi-gel state will be described below. For the mixing rotor 19 (21) of the first mixing section 23 (second mixing section 24), as shown in the cross-sectional view of Fig. 4, a maximum outer diameter section 42 having a maximized radius of the cross section perpendicular to the axial direction is formed in a section of the outer periphery of the mixing rotor 19 (21). The maximum outer diameter section 42 of one mixing rotor 19 (21) is shown as two protrusions opposing each other by 180 degrees in the cross section of Fig. 4 and formed in a spiral shape in the axial direction (see Fig. 2). A minimum outer diameter section having a minimized radius is formed between the maximum outer diameter section 42 and the maximum outer diameter section 42 of one mixing rotor 19 (21).

Each of the maximum outer diameter sections 42 of the mixing rotors 19 and 19 (21 and 21) arranged in the left and right passage sections 11 and 12 forms a chip clearance (gap G) to inner walls of the passage sections 11, 12, and a material 26 is sheared when passing through the chip clearance (gap G). The gap G can be smaller while maintaining mechanical strength, and a shear rate can be increased as compared with a conventional biaxial machine in which meshed screws are used. Furthermore, shearing and compression of the material 26 are performed in the mixing rotor. Therefore, a shear force increases, while a shear time shortens. In addition, the shearing and compression are followed by release action caused by the minimum outer diameter section, and these actions are repeated, so that even if the shear force is increased, generation of heat is reduced. Furthermore, the gap G can be easily changed by replacing the mixing rotor, and the shear force can be arbitrarily and suitably set.

The two passage sections 11 and 12 have a cocoon-shaped cross section as described above. Such a shape increases a gap between circles drawn by the respective maximum outer diameter sections 42 of two mixing rotors 19 and 19 (21 and 21), and a release space for the material 26 can be increased. Consequently, the shear action, release action, and continuous flow in the axial direction by the chip clearance to the material 26 can be efficiently promoted.

When the resin material supplied from the material supply port 17 to the respective passage sections 11 and 12 of the first casing 13 is in pellets (in general, cylindrical bodies having a length of about 3 mm and a diameter of about 3 mm), the gap G (see Fig. 4) between the maximum outer diameter section 42 of the first mixing rotor 19 and the inner walls of the passage sections 11, 12 of the first casing 13 is set to be slightly smaller than the maximum dimension of resin pellets. As an example of the gap G, a preferable dimension is from 1 to 4 mm.

While being fed from the material supply port 17 to this first mixing section 23, the material 26 (see Fig. 4) preheated by the heating means 25 attached to the outer periphery of the first casing 13 is subjected to the shear action when the material passes through the gap G and is made to be in the semi-gel state in the first mixing section 23. Thus, when the material 26 is made to be in the semi-gel state, moisture adhered to the resin material evaporates.

To deaerate the evaporated moisture as described above, in the first casing 13, a first open vent 27 is provided for communicating the passage section in which the second screw 20 is disposed to the outside. Consequently, the moisture evaporated from the resin 26 in the semi-gel state in the first mixing section 23 is discharged to outside the first casing 13 via the first open vent 27. As a result, the moisture evaporated in the first mixing section 23 can be prevented from being kneaded again and supplied into the molten resin 26 in the semi-gel state.

For such deaeration, when the resin material obtained by adding a filler (for example, talc or calcium carbonate) to the resin is kneaded and extruded, the filler has a very high hygroscopic property, and the kneading extrusion performed with this device that deaerates the material in the semi-gel state improves quality of the molten resin of a final product and improves discharge capacity. In a conventional device that does not perform this deaeration, however, moisture is kneaded into the molten resin, which makes it difficult to perform the vacuum deaeration in the later process and reduces the discharge capacity.

Furthermore, when the resin material is PET (polyethylene terephthalate), in the kneading extrusion with the conventional device, there is a problem that moisture is kneaded into the molten resin to cause hydrolysis. When the material is deaerated in the semi-gel state, such hydrolysis practically does not occur at all.

The second mixing section 24 is designed to fully melt and knead the resin 26, which has been brought to a semi-gel state and degassed in the first mixing section 23 and subsequently delivered by the second screw 20. To achieve this, the gap G (as shown in Fig. 4) between the maximum outer diameter section 42 of the second mixing rotor 21 and the inner walls of the passage sections 11 and 12 of the first casing 13 is set small, for example, 0.1-1.0 mm, in cases where the viscosity of the resin decreases during the melting process.

When the resin material supplied from the material supply port 17 to each of the passage sections 11, 12 of the first casing 13 is powder, the gap G (see Fig. 4) between the maximum outer diameter section 42 of the first mixing rotor 19 and the inner walls of the passage sections 11, 12 of the first casing 13 is set to be small enough for the semi-gel state, depending on a particle size. In general, the gap G in this case is preferably from about 0.1 to 1.0 mm.

In the biaxial continuous kneading extrusion device 10, however, the gap G between the mixing rotor 19, 21 in a plurality of mixing sections 23, 24 and the inner walls of the passage sections 11, 12 of the first casing 13 is set to be smaller as being toward a terminal end of the biaxial kneading feeder 16 when the resin decreases viscosity in the process of being molten and set to be larger as being toward the terminal end when the resin increases viscosity in the process of being molten. As aspects of decreasing the gap G as being toward the terminal end, an aspect of setting the gap G to be constant within the same mixing rotor and decreasing the gap G in the mixing rotor closer to the terminal end (in the present embodiment, the gap G in the mixing rotor 21 is set to be smaller than the gap G in the mixing rotor 19), and an aspect of decreasing the gap G closer to terminal end even in the same mixing rotor can be considered in forming each mixing rotor.

When a screw shaft rotation speed is high, it is preferable to provide a bearing 35 in the end of the casing to reduce deviation of the screw at high speed. In this case, in the bearing 35, the left and right passage sections 11 and 12 are independent without communication (see Fig. 3). This is not the case when the screw shaft rotation speed is low, and as shown in Fig. 4, in the end of the casing, respective horizontal passage sections 11 and 12 may communicate between the screws.

In the end of the casing, a flow rate adjustment mechanism 36 is provided, and one perpendicular through passage 38 is provided inside the flow rate adjustment mechanism 36, and this one through passage is formed to communicate with the two horizontal passage sections in the end of the casing (see Fig. 2).

As shown in Fig. 1, a tubular valve body 39 in the flow rate adjustment mechanism 36 is capable of reciprocating in a direction of arrow H. The valve body 39 opens and closes the through passage 38 while moving and adjusts a flow rate of molten resin flowing through the through passage 38.

On the other hand, the molten resin flowing through the through passage 38 and discharged from a lower end of the through passage 38 has the flow rate adjusted, and the passage section 31 formed inside the second casing 29 of the uniaxial screw section 33 that receives the molten resin at a receiving port opens to the outside at the other end of the second casing. This open portion constitutes a discharge port 40 for the molten resin. Furthermore, the second casing 29 in the uniaxial screw section 33 includes a second open vent 41 for vacuum deaeration, and the open vent 41 communicates with the passage section 31 of the second casing 29.

Thus, the flow rate adjustment mechanism 36 is disposed between the biaxial kneading feeder 16 and the uniaxial screw section 33 and adjusts the flow rate of the molten resin reaching the uniaxial screw section 33.

In the above embodiment of the present invention, the present invention is not limited only to the above examples and can be arbitrarily and suitably changed within the scope of the present invention.

For example, the flow rate adjustment mechanism 36 may have another configuration, or an aspect in which the flow rate adjustment mechanism is not provided may be considered. In one example of another configuration of the flow rate adjustment mechanism 36, the first kneading feed shaft 14 and the second kneading feed shaft 15 are configured to be movable in the axial direction, and the first kneading feed shaft 14 and the second kneading feed shaft 15 as well as an uneven portion formed on an inner surface of the casing 13 around the shafts form a valve body, so that in this structure, a degree of opening of the flow path may be adjusted. The resin, having high viscosity and low fluidity, may be supplied from the terminal end of the biaxial section to the receiving port of the screw shaft 32, by freely falling without flowing through the flow rate adjustment mechanism. Furthermore, if the resin, having high viscosity, is sticky and cannot enter the receiving port of the screw shaft 32 only by freely falling, the resin may be supplied to the receiving port of the screw shaft 32 with a pusher (unshown piston type push-in device). A large number of mixing rotors having different rotor gaps may be set in accordance with the melting resistance and viscosity of the resin.

Also, in the embodiment shown in Fig. 1, the passage sections 11 and 12 of the biaxial kneading feeder 16 are horizontally arranged, to feed the material from the passage sections 11 and 12 through the perpendicularly extending through passage 38 to the uniaxial screw section 33 disposed below the biaxial kneading feeder 16. Alternatively, the uniaxial screw section 33 may be disposed laterally in the horizontal direction relative to the biaxial kneading feeder 16 and configured to extend through the through passage 38 in the horizontal direction. In this case, the embodiment may be used from which the flow rate adjustment mechanism 36 is removed.

Furthermore, in the embodiment shown in Fig. 1, the biaxial kneading feeder 16 and the uniaxial screw section 33 are arranged so that their axial directions are substantially parallel. Alternatively, the biaxial kneading feeder 16 and the uniaxial screw section 33 may be arranged so that their axial directions form a constant angle, for example, 90 degrees.

Furthermore, in the above embodiment, in each of the kneading feed shafts 14 and 15, two mixing rotors and three screws are also provided, but the present invention is not limited to this example, and the numbers and axial lengths of the rotors and screws may be arbitrarily and suitably set. That is, in each of the kneading feed shafts 14 and 15, one or three or more mixing rotors, and one, two or four or more screws may be provided. Alternatively, in each of the kneading feed shafts 14 and 15, no screws may be provided, and the mixing rotor may only be provided. In this case, the mixing rotor having about the same length as the axial length of the kneading feed shaft 14, 15 may be provided. Furthermore, the positions and lengths of the corresponding sections in the axial direction, in which the screws and mixing rotors are formed, are set to be the same, and the shape of the sections is symmetrical, but the present invention is not limited to this example. For example, in at least one section in the axial direction, the kneading feed shafts 14 and 15 may have distinct positions, different lengths and an asymmetrical shape.

Furthermore, the cross-sectional shape of the mixing rotor is not limited to the example of Fig. 4, and any arbitrary and suitable shape in which the chip clearance can be formed can be considered. In addition, the phase shift between the left mixing rotor and the right mixing rotor may be an angle different from 90 degrees.

Furthermore, the example in which the cross sections of the two passage sections 11 and 12 have the cocoon shape is illustrated, but the present invention is not limited to this shape.

### REFERENCE SIGNS LIST

- 10: biaxial continuous kneading extrusion device
- 11: passage section
- 12: passage section
- 13: first casing
- 14: first kneading feed shaft
- 14a: base shaft of the first kneading feed shaft
- 15: second kneading feed shaft
- 15a: base shaft of the second kneading feed shaft
- 16: biaxial kneading feeder
- 17: material supply port
- 18: first screw
- 19: first mixing rotor
- 20: second screw
- 21: second mixing rotor
- 22: third screw
- 23: first mixing section
- 24: second mixing section
- 25: heating means
- 26: molten resin material
- 27: first open vent
- 29: second casing
- 31: passage section
- 32: screw shaft
- 33: uniaxial screw section
- 35: bearing
- 36: flow rate adjustment mechanism
- 38: through passage
- 39: valve body
- 40: discharge port
- 41: second open vent
- 42: maximum outer diameter section

## Claims

1. A biaxial continuous kneading extrusion device, comprising:
a biaxial kneading feeder including two passage sections arranged in parallel in a state of communication with each other, and a first kneading feed shaft and a second kneading feed shaft rotatably arranged in the two passage sections, respectively, to knead a material supplied to the two passage sections and
a uniaxial screw section including a single passage section that receives the material fed out from the biaxial kneading feeder, and a separate screw shaft rotatably disposed in the single passage section to extrude the material from the single passage section, wherein in each of the first and second kneading feed shafts, a mixing rotor is formed in at least one section in an axial direction.

2. The biaxial continuous kneading extrusion device according to claim 1, wherein the separate screw shaft is controlled to rotate at a lower speed than a rotation speed of the first kneading feed shaft and the second kneading feed shaft.

3. The biaxial continuous kneading extrusion device according to claim 1, wherein in a section of an outer periphery of the mixing rotor, a maximum outer diameter section at which a radius is maximized in a cross section perpendicular to the axial direction is formed, a chip clearance is formed between the maximum outer diameter section and inner walls of the passage sections, and the material is sheared when passing through the chip clearance.

4. The biaxial continuous kneading extrusion device according to claim 3, wherein the first kneading feed shaft and the second kneading feed shaft are controlled to rotate in mutually opposite directions.

5. The biaxial continuous kneading extrusion device according to claim 1, wherein the two passage sections have a cocoon shape as viewed in the cross section perpendicular to the axial direction.

6. The biaxial continuous kneading extrusion device according to claim 1, wherein the mixing rotor is provided in each of a plurality of sections in the axial direction that are spaced apart from each other in the first and second kneading feed shafts.

7. The biaxial continuous kneading extrusion device according to claim 6, wherein a screw is provided in a section in the axial direction in which the mixing rotor is not formed.

8. The biaxial continuous kneading extrusion device according to claim 6, wherein a plurality of mixing rotors each formed in each of the plurality of sections in the axial direction is formed so that the chip clearance is smaller as being toward a terminal end of the biaxial kneading feeder when the material decreases viscosity in a process of being molten or so that the chip clearance is larger as being toward the terminal end when the material increases the viscosity in the process of being molten.

9. The biaxial continuous kneading extrusion device according to claim 7 or 8, wherein each of the first kneading feed shaft and the second kneading feed shaft includes a base shaft, and at least one of the mixing rotor and the screw is replaceably attachable to the base shaft.

10. The biaxial continuous kneading extrusion device according to any one of claims 1 to 8, wherein the biaxial kneading feeder includes a first open vent for deaeration.

11. The biaxial continuous kneading extrusion device according to claim 10, wherein the uniaxial screw section includes a second open vent for vacuum deaeration.

12. The biaxial continuous kneading extrusion device according to claim 11, wherein the biaxial kneading feeder and the uniaxial screw section include heating means for heating the material.

13. The biaxial continuous kneading extrusion device according to claim 12, wherein when the material supplied to the two passage sections is a pellet material, to make the pellet material to be in a semi-gel state with the mixing rotor, the chip clearance is set to be smaller than a maximum dimension of the pellet material, or
when the material supplied to the two passage sections is a powder material, to make the powder material to be in the semi-gel state with the mixing rotor, the chip clearance is set depending on a particle size of the powder material.

14. The biaxial continuous kneading extrusion device according to any one of claims 1 to 8, wherein in a flow path in which the material flows from the biaxial kneading feeder to the uniaxial screw section, a flow rate adjustment mechanism is provided for adjusting a flow rate of the material.
